# FASCICULE DE BREVET EUROPEEN

(11) **EP 3 022 460 B1**
(45) Date de publication et mention de la délivrance du brevet: **11.09.2019**
(21) Numéro de dépôt: 14790144.1
(22) Date de dépôt: 17.07.2014
(51) Int. Cl.: F16F 9/512

(54) **AMORTISSEUR POUR VÉHICULE**
STOSSDÄMPFER FÜR EIN FAHRRAD
SHOCK ABSORBER FOR A VEHICLE

(30) Priorité: 17.07.2013 FR 1357017
(43) Date de publication de la demande: 25.05.2016
(73) Titulaire: Bossard, Olivier, 31240 Saint Jean (FR)
(72) Inventeur: Bossard, Olivier, 31240 Saint Jean (FR)
(74) Mandataire: Ipside
(86) Numéro de dépôt international: PCT/FR2014/051840
(87) Numéro de publication internationale: WO 2015/007998

(56) Documents cités:
- WO-A1-2006/037816
- DE-B3-102008 009 543
- ES-A1- 2 152 149
- FR-A1- 2 412 757

## Description

### Domaine technique.

La présente invention est du domaine des équipements pour véhicule et concerne un amortisseur prévu pour être interposé entre les masses suspendues et non suspendues du véhicule. Par masse suspendue il faut entendre la caisse du véhicule et les équipements portés par cette dernière tandis que par masse non suspendue, il faut entendre essentiellement la roue concernée du véhicule.

### État de la technique antérieure.

Typiquement chaque combiné amortisseur d'un véhicule est interposé mécaniquement entre la roue concernée et le châssis du véhicule. Ce combiné comprend habituellement un ressort à spires disposé autour de l'amortisseur. Le ressort à spires a pour but d'emmagasiner l'énergie mécanique reçue tandis que l'amortisseur à pour but de dissiper cette énergie. Dans ce but l'amortisseur comprend un corps d'amortisseur dans lequel est formé un alésage cylindrique dans lequel est monté un piston cylindrique divisant l'alésage en deux chambres de travail recevant un fluide de travail en l'espèce de l'huile, ces deux chambres étant en communication l'une avec l'autre par l'entremise de sections de laminage pratiquées dans le piston associées éventuellement à des clapets. Ce piston est fixé à une tige de piston engagée, de manière étanche en coulissement dans un perçage traversant pratiqué dans une cloison d'obturation de l'alésage cylindrique que présente le corps d'amortisseur. Deux configurations de montage sont possibles. La tige de l'amortisseur est solidarisée à la masse non suspendue et le corps d'amortisseur est solidarisé à la masse suspendue ou bien, la tige du piston est solidarisée à la masse suspendue et le corps de l'amortisseur est solidarisé à la masse non suspendue.

### Exposé de l'invention.

### Problème technique.

On sait que la tenue de route d'un véhicule dépend étroitement de la qualité de l'amortisseur et de la loi d'amortissement propre à ce dernier. On sait aussi qu'en raison de leur différence, les masses non suspendue et suspendue devraient être amorties selon des lois différentes pour une meilleure tenue de route. Or les amortisseurs actuels ne présentent aucun moyen pour assurer une discrimination entre le mouvement des deux masses de sorte que ces amortisseurs sont le résultat d'un compromis entre les deux exigences précitées.

On connaît cependant des amortisseurs équipés d'un moyen sensible au mouvement de la masse, suspendue on non suspendue, associée à la tige. De cette façon une discrimination est possible et il devient également possible de mettre en oeuvre une loi d'amortissement propre à cette masse. Un tel amortisseur est décrit dans le brevet FR 1 446 604. Selon ce brevet, la tige du piston, depuis le piston, présente un perçage borgne axial prolongé à angle droit par un perçage radial débouchant dans la surface cylindrique de la tige. En regard du perçage radial est montée en coulissement sur la tige du piston une masselotte liée mécaniquement au piston par un ressort à spires disposé autour de la tige. La masselotte présente un alésage traversant cylindrique par lequel elle est engagée sur la tige du piston. Cet alésage traversant comporte une rainure annulaire en relation de communication avec deux perçages radiaux débouchant dans la surface externe de la masselotte. Cette rainure annulaire est écartée des extrémités de l'alésage à fin de laisser subsister deux portées cylindriques de guidage, continue En situation normale d'utilisation, le perçage radial de la tige est en relation de communication avec la rainure annulaire afin de créer une section de laminage. En revanche en présence d'une forte accélération imprimée à la tige soit vers le haut soit vers le bas, est obtenu un mouvement de déplacement relatif de la masselotte le long de la tige sous l'effet duquel l'une des deux portées de guidage vient obturer le perçage radial de la tige.

On connaît également du FR 2 412 757 un amortisseur comportant une masselotte montée sur la tige. Pour cet amortisseur le mouvement de la masselotte par rapport à la tige conduit à libérer le passage radial.

L'inconvénient de ces dispositions réside dans le fait que la présence de la masselotte sur la tige limite la course de cette dernière.

### Solution technique.

La présente invention a pour objet un amortisseur dont la masselotte est montée non plus sur la tige, mais sur le piston.

A cet effet l'amortisseur selon l'invention, comprenant un corps d'amortisseur dans lequel est formé un alésage cylindrique dans lequel est monté en coulissement un piston divisant l'alésage cylindrique en deux chambres de travail recevant un fluide de travail tel que de l'huile, au moins une section de laminage de fluide, formée d'un passage et d'un moyen de laminage associé au passage, étant établie entre les deux chambres de travail au travers du piston, lequel est monté en extrémité d'une tige de piston et comporte un axe géométrique longitudinal AA', de symétrie, parallèle à sa direction de déplacement dans l'alésage, ledit piston comportant en outre une ou des faces périphériques parallèles à son axe géométrique longitudinal, se caractérise essentiellement en ce que le piston présente une portée de guidage, une voie d'évitement du moyen de laminage débouchant radialement dans la ou l'une des faces périphériques du piston, et apte à assurer la communication entre les deux chambres de travail et une masselotte montée en coulissement selon l'axe longitudinal du piston, sur la portée de guidage et sur ladite face périphérique, et ce entre une position d'obturation de la voie d'évitement et une position de dégagement de cette dernière, la masselotte étant sollicitée vers la position d'obturation par un organe élastique de rappel.

En raison de cette disposition sont obtenues deux lois d'amortissement, une pour la masse suspendue l'autre pour la masse non suspendue et ce sans réduire l'amplitude du mouvement de la tige du piston. La valeur du tarage de l'organe élastique détermine la valeur de l'accélération à partir de laquelle la voie d'évitement sera ouverte.

Selon une autre caractéristique de l'invention, l'organe élastique est taré.

Selon une autre caractéristique de l'invention, la masselotte est apte à ouvrir la voie d'évitement lors d'une forte accélération verticale dirigée vers le haut imprimée à la masse non suspendue. Une telle disposition permet de dégrader la charge hydraulique en phase de compression de l'amortisseur et de limiter ainsi l'importance des efforts communiqués à la masse suspendue lors de cette phase.

Selon une autre caractéristique de l'invention, la voie d'évitement est formée d'un perçage en relation de communication avec la section de laminage et ce en amont du moyen de laminage que comporte cette section.

Selon une autre caractéristique de l'invention, la voie d'évitement est constituée par un perçage radial pratiqué dans le piston débouchant dans un perçage axial pratiqué dans le piston et débouchant sur la face libre de tige, de ce dernier.

### Bref exposé des figures et des dessins.

D'autres avantages, buts et caractéristiques de l'invention, apparaîtront à la lecture de la description d'une forme préférée de réalisation, donnée à titre d'exemple non limitatif en se référant aux dessins annexés en lesquels :
- la figure 1 est une vue en coupe d'un amortisseur conforme à l'invention, selon une première forme de réalisation,
- la figure 2 est une vue en coupe d'un amortisseur selon une variante d'exécution de la figure 1,
- la figure 3 est une vue en coupe d'un amortisseur selon une seconde forme de réalisation,
- la figure 4 est une vue en coupe d'un amortisseur selon une variante d'exécution de cette seconde forme de réalisation.

### Meilleure manière de réaliser l'invention.

Tel que représenté, l'amortisseur selon l'invention, comprend un corps d'amortisseur 1 de forme générale cylindrique dans lequel est foré un alésage cylindrique dans lequel est monté en coulissement un piston 2 fixé en extrémité d'une tige 20. Ce piston divise l'alésage cylindrique en deux chambres de travail 10 recevant chacune un fluide hydraulique tel de l'huile. Le corps d'amortisseur, sous forme de tube, reçoit à chacune de ses deux extrémités un flasque d'obturation de la chambre de travail 10 correspondante. L'un des deux flasques est doté d'un perçage traversant central équipé de bagues d'étanchéité dans lesquelles est montée en coulissement, de manière étanche, la tige 20 du piston de l'amortisseur.

Le piston 2 forme d'un corps de révolution et présente un axe longitudinal de symétrie AA' correspondant à son axe de révolution. Cet axe longitudinal est confondu avec la direction de déplacement du piston dans l'alésage du corps de l'amortisseur. Ce piston présente une ou des faces périphériques, généralement cylindriques, se développant de manière parallèle à son axe longitudinal AA'.

Comme connu, le piston, comporte un corps de piston 21 fixé en extrémité de la tige 20 de piston. Le corps de piston 21 comporte une forme de disque 210. Cette forme de disque 210 présente une gorge continue dans laquelle est disposée une garniture d'étanchéité adaptée à glisser sur la face cylindrique de l'alésage du corps 1 d'amortisseur et assurer l'étanchéité à ce niveau entre les deux chambres de travail 10. Un tel amortisseur est prévu pour être interposé entre une masse suspendue, en l'espèce, le châssis d'un véhicule et une masse non suspendue, en l'espèce l'une des roues de ce véhicule.

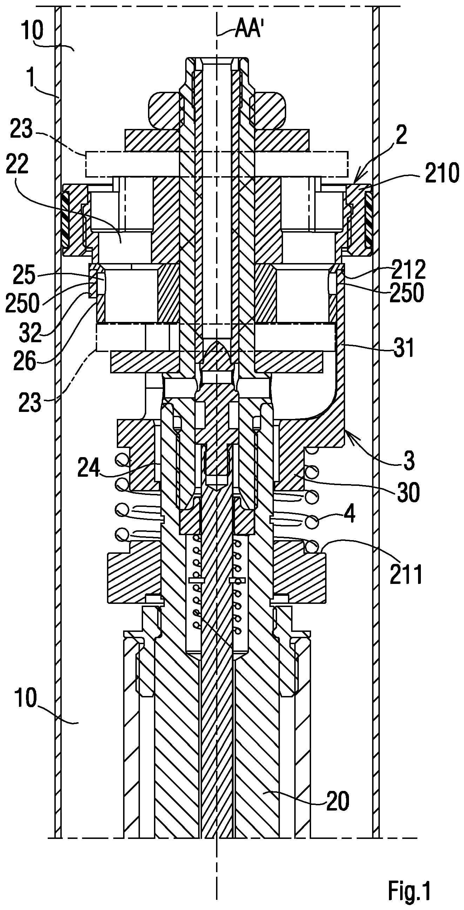

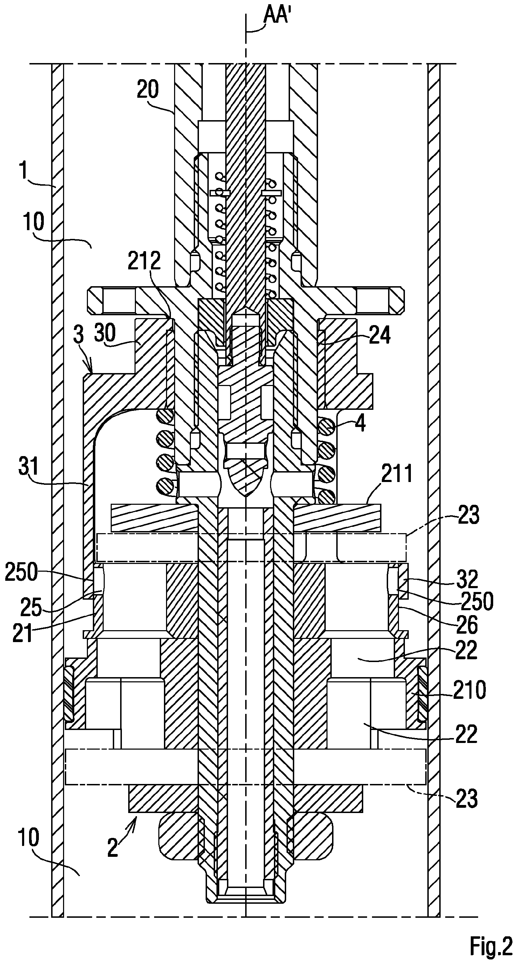

Les deux chambres de travail 10 de l'amortisseur sont en relation de communication l'une avec l'autre au travers d'au moins une section 22 de laminage de fluide formée par un passage traversant pratiqué dans la forme de disque 210 du piston 2 et par au moins un moyen de laminage 23 associé au passage traversant. Ce moyen de laminage 23 peut être formé, par exemple, par des lamelles élastiques, par des clapets, par une combinaison de lamelles élastiques et de clapets, ces derniers pouvant être des clapets anti-retour, ou par tous autres moyens, aptes à laminer le fluide, c'est-à-dire à ralentir la circulation du fluide au travers de la section 22 dans un but de dissipation de l'énergie mécanique. En figure 1 et 2 sont représentés de manière symbolique, sous forme de traits mixtes, des moyens de laminage 23.

Le fluide hydraulique passe d'une chambre de travail 10 à l'autre quand le volume de ces chambres 10 est amené à varier du fait du mouvement du piston 2 et de la tige 20 dans l'alésage du corps 1 de l'amortisseur. Ce déplacement résulte des sollicitations mécaniques appliquées par la chaussée sur la masse non suspendue, et ce lors du roulage du véhicule, mais aussi des sollicitations mécaniques de rappel imprimées par un ressort d'amortisseur monté en compression entre le corps d'amortisseur et la tige du piston.

Conformément à l'invention, le piston 2 est équipé d'une portée de guidage cylindrique 24, en relation de coaxialité avec la forme de disque 210, une voie 25 d'évitement du moyen de laminage 23, débouchant radialement dans la ou l'une 26 des faces périphériques du piston 2, et apte à assurer la communication entre les deux chambres de travail 10 et une masselotte 3 montée en coulissement d'une part sur la portée de guidage 24 et d'autre part sur la face périphérique 26 susdite du piston et ce entre une position d'obturation de la voie d'évitement 25 et une position de dégagement de cette dernière, la masselotte 3 étant sollicitée vers la position d'obturation par un organe élastique 4, de rappel, taré, monté en compression entre la masselotte 3 et une première surface de butée 211 ménagée dans le corps de piston. En position d'obturation de la voie d'évitement 25, la masselotte 3 est maintenue en appui par l'organe élastique 4 contre une seconde surface de butée 212 ménagée dans le corps de piston 21.

La masselotte 3 est mobile sur la portée de guidage 24 et sur la face périphérique 26 selon la direction définie par l'axe longitudinal du piston. Cette masselotte 3 se trouve essentiellement guidée dans son mouvement par la portée de guidage 24.

Le débouché de la voie d'évitement 25 sur la face périphérique 26 se présente par exemple sous la forme d'un orifice circulaire 250.

La voie d'évitement 25, formée par un passage pratiqué dans le piston 2, est en relation de communication avec les deux chambres de travail 10 et établit un shunt hydraulique de part et d'autre du moyen de laminage 23 que comporte la section de laminage. Elle permet donc le transfert de fluide de travail d'une chambre à l'autre avec peu de pertes de charge.

En position d'obturation de cette voie d'évitement 25, la masselotte 3 vient recouvrir et obturer l'orifice 250 de sorte que tout transfert d'huile d'une chambre de travail 10 à l'autre ne peut s'effectuer que par la section de laminage 22. En revanche, en position de dégagement de cet orifice 250, le fluide hydraulique transite par la voie d'évitement 25 en raison de la faible perte de charge que cette dernière présente par rapport à celle de la section de laminage. Le fluide hydraulique n'est plus laminé, on assiste alors à un effondrement de la charge hydraulique et à un déplacement rapide du piston 2 dans l'alésage du corps d'amortisseur 1.

La masselotte 3 est apte à ouvrir la voie d'évitement 25 lors d'une forte accélération verticale dirigée vers le haut imprimée à la masse non suspendue. Une telle disposition permet de dégrader la charge hydraulique lors de la phase de compression de l'amortisseur et de limiter, en réalisant un écrêtage de l'effort, l'importance des sollicitations communiquées à la masse suspendue. En fait, une accélération verticale dirigée vers le haut, imprimée à la masse non suspendue, se traduit par un déplacement du piston 2 par rapport à la masselotte 3 dans le sens de l'ouverture de la voie d'évitement 25. La valeur de la masse de la masselotte 3, la raideur de l'organe élastique 4 ainsi que la valeur du tarage de ce dernier, c'est-à-dire la valeur de pré-compression, déterminent un seuil de déclenchement de l'ouverture de l'orifice 250 de la voie d'évitement 25. Ainsi, sous l'effet de faibles sollicitations mécaniques se situant en deçà de ce seuil de déclenchement, cette voie d'évitement 25 demeurera fermée. En revanche, pour des sollicitations mécaniques situées au-delà du seuil de déclenchement, cette voie d'évitement 25 se trouvera dégagée. Il y a lieu de noter que sous l'effet de faibles sollicitations mécaniques, la masselotte 3 est maintenue en butée contre la surface 212 et le piston 2 et la masselotte 3 demeurent fixes l'un par rapport à l'autre. En revanche lorsque les sollicitations dépassent le seuil de déclenchement, le déplacement du piston 2 et de la masselotte 3 l'un par rapport à l'autre, conduit au dégagement de l'orifice 250 de la voie d'évitement 25, le déplacement relatif de la masselotte 3 s'effectuant à l'encontre de l'action exercée par l'organe élastique 4. Lorsque cette sollicitation cesse, la masselotte 3 est ramenée en position d'obturation de cet orifice 250 par l'organe élastique 4.

Selon une forme préférée de réalisation, la face périphérique 26 est de forme cylindrique et est en relation de coaxialité avec la portée cylindrique de guidage 24.

Avantageusement, l'organe élastique 4 est constitué par un ressort à spires non jointives. Ce ressort est engagé sur le corps de piston 21.

Il y a lieu de noter que la sollicitation mécanique que peut exercer sur la masselotte 3, le fluide hydraulique présent dans la ou chaque voie d'évitement 25, ne possède aucune composante axiale mais seulement une composante radiale. Ainsi la masselotte 3 ne peut aucunement être déplacée sur le piston 2 sous l'effet de cette sollicitation.

Selon une première forme de réalisation, telle que représentée en figures 1 et 2, la voie d'évitement 25 est en relation de communication avec le passage traversant 22 constitutif de la section de laminage, et débouche dans ce passage en amont du moyen de laminage 23.

La masselotte 3, selon cette forme de réalisation, comprend un corps de masselotte 30 présentant une forme de douille équipée d'un alésage traversant axial dans lequel est montée une bague de guidage. Cette masselotte 3, par la bague de guidage, est engagée en coulissement sur la portée de guidage 24. La forme de douille du corps de masselotte 30 est prolongée par plusieurs bras 31, régulièrement répartis, portant à distance un élément d'obturation 32 sous forme de bague, engagé en coulissement sur la face périphérique 26. La forme de douille et la forme de bague sont coaxiales. De préférence, les bras 31 sont au nombre de 3. L'élément d'obturation 32 est doté d'une face cylindrique interne par laquelle il est monté en ajustement glissant sur la face périphérique 26. Cette face cylindrique interne constitue une face d'obturation de la voie d'évitement 25 et de l'orifice 250 de cette dernière.

Dans la forme de réalisation objet des figures 1 et 2, le piston 2 est équipé d'une part de plusieurs sections de laminage 22 s'étendant au travers notamment de la forme de disque 210 et ce parallèlement à l'axe AA' et d'autre part de plusieurs voies d'évitement 25 débouchant chacune sur la face périphérique 26. Les orifices 250 de ces voies d'évitement sont régulièrement répartis sur la face périphérique 26. Cette face périphérique 26 est attenante à la forme de disque 210. La face de butée 212 est formée par un épaulement formant saillie sur cette face périphérique 26.

L'organe élastique 4 est externe au corps de masselotte et est maintenu en compression entre le corps 30 de masselotte et un épaulement du piston formant la surface de butée 211.

Dans la forme de réalisation objet de la figure 1, l'amortisseur est prévu pour être fixé par sa tige 20 à la masse non suspendue et par son corps 1 à la masse suspendue.

En figure 2 est représentée une variante de l'amortisseur selon la figure 1. La tige 20 de cet amortisseur est prévue pour être fixée à la masse suspendue et le corps 1 de l'amortisseur à la masse non suspendue. Dans ce cas de figure, le ressort 4 est disposé dans la masselotte entre les bras 31 que comporte cette masselotte 3 et prend appui contre un épaulement du piston formant la surface de butée 211 et contre le corps 30 de masselotte 3. La surface de butée 212, dans ce cas de figure, est formée à distance de la face périphérique 26, sur le corps de piston.

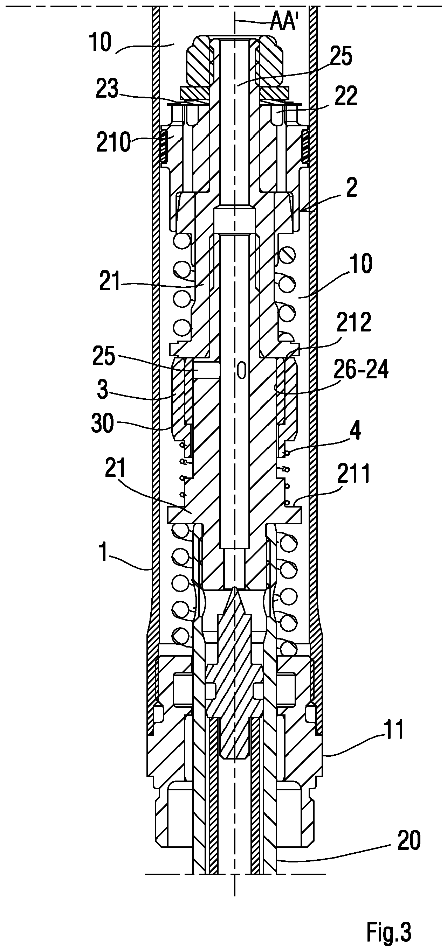

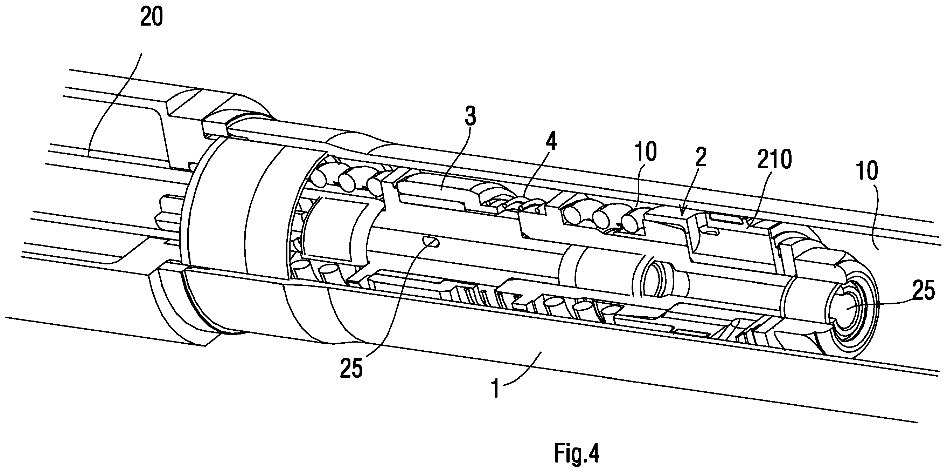

En figures 3 et 4 est représenté un amortisseur selon une autre forme de réalisation. On peut voir que la voie d'évitement 25 est formée par un perçage axial pratiqué dans le piston 2 et débouchant dans la face de ce denier opposée à la tige 20, et par des perçages radiaux formés dans le piston et débouchant d'une part dans la face périphérique 26 et dans le perçage axial. Plusieurs sections de laminage, connues en soi, sont formées dans le piston et plus particulièrement dans la forme 210 de disque que comporte ce dernier.

La voie d'évitement 25 débouche en amont et en aval de ces sections de laminage 22.

La masselotte 3, selon cette forme de réalisation, présente un corps tubulaire 30 cylindrique doté d'un alésage traversant recevant une bague de guidage. Cette masselotte 3, par cette bague de guidage, est montée sur la surface latérale périphérique 26, cette dernière, de forme cylindrique, constituant également la portée de guidage 24.

Selon la forme de réalisation objet de la figure 3, le ressort 4 est monté en compression autour du piston 2 entre la masselotte 3 et un épaulement du piston formant la surface de butée 211. Dans cette configuration, le ressort 4 est situé entre, d'une part, l'extrémité du piston recevant la tige 20 et d'autre part, la masselotte 3. La surface de butée 212 est formée par un épaulement du corps de piston.

L'amortisseur, selon cette forme de réalisation, est prévu pour être fixé par sa tige 20 à la masse non suspendue et par son corps 1 à la masse suspendue.

Pour l'amortisseur selon la figure 4, le ressort 4 occupe une position inverse et est situé entre la masselotte 3 et l'extrémité du piston 2 exempte de tige. Un tel amortisseur est prévu pour être fixé par son corps à la masse non suspendue et par sa tige à la masse suspendue.

Il va de soi que la présente invention peut recevoir tous aménagements et variantes du domaine des équivalents techniques sans pour autant sortir du cadre du présent brevet tel que défini par les revendications ci-après.

## Revendications

1. Amortisseur, comprenant un corps d'amortisseur (1) dans lequel est formé un alésage cylindrique dans lequel est monté en coulissement un piston (2) divisant l'alésage cylindrique en deux chambres de travail (10) recevant un fluide de travail tel que de l'huile, au moins une section de laminage (22) de fluide, formée d'un passage et d'un moyen de laminage associé au passage, étant établie entre les deux chambres de travail (10) au travers du piston, lequel est monté en extrémité d'une tige (20) de piston et comporte un axe géométrique longitudinal (AA'), de symétrie, parallèle à sa direction de déplacement dans l'alésage, ledit piston (2) comportant en outre une ou des faces périphériques parallèles à son axe géométrique longitudinal, **caractérisé en ce que** le piston présente une portée de guidage (24), une voie (25) d'évitement du moyen de laminage, débouchant radialement dans la ou l'une (26) des faces périphériques du piston (2), et apte à assurer la communication entre les deux chambres de travail (10) et une masselotte (3) montée en coulissement selon l'axe longitudinal (AA') du piston (2), sur la portée de guidage (24) et sur ladite face périphérique (26), et ce entre une position d'obturation de la voie d'évitement (25) et une position de dégagement de cette dernière, la masselotte (3) étant sollicitée vers la position d'obturation de la voie d'évitement (22) par un organe élastique de rappel (4) prenant appui sur une surface de butée (211) du piston (2).

2. Amortisseur selon la revendication précédente, **caractérisé en ce que** l'organe élastique de rappel (4) est taré.

3. Amortisseur selon la revendication 1 ou la revendication 2, **caractérisé en ce que** la masselotte (3) en position d'obturation de la voie d'évitement (25), prend appui contre une surface de butée (212) du piston (2).

4. Amortisseur selon l'une quelconque des revendications précédentes, **caractérisé en ce que** la face périphérique (26) et la portée de guidage (24) sont cylindriques et coaxiales.

5. Amortisseur selon l'une quelconque des revendications précédentes, **caractérisé en ce que** la voie d'évitement (25) est formée d'un perçage radial en relation de communication avec la section de laminage (22) et ce en amont du moyen de laminage que comporte cette section.

6. Amortisseur selon la revendication précédente, **caractérisé en ce que** le perçage constitutif de la voie d'évitement (25) débouche dans le passage constitutif de la section de laminage (22) et ce en amont du moyen de laminage.

7. Amortisseur selon la revendication 4 ou la revendication 5, **caractérisé en ce que** le piston comporte plusieurs sections de laminage (22) et plusieurs voies d'évitement (25) en relation de communication avec les sections de laminage.

8. Amortisseur selon l'une quelconque des revendications 5 à 7, **caractérisé en ce que** la masselotte (3) présente un corps de masselotte (30) présentant une forme de douille équipée d'un alésage traversant axial dans lequel est montée une bague de guidage engagée en coulissement sur la portée de guidage (24), que la forme de douille du corps de masselotte (30) est prolongée par plusieurs bras (31) portant à distance un élément d'obturation (32) sous forme de bague, engagé en coulissement sur la face périphérique (26) et que l'élément d'obturation (32) est doté d'une face cylindrique interne par laquelle il est monté en ajustement glissant sur la face périphérique (26), ladite face cylindrique interne constituant une face d'obturation de la voie d'évitement (25).

9. Amortisseur selon l'une quelconque des revendications 1 à 4, **caractérisé en ce que** la voie d'évitement (25) est formée par un perçage axial pratiqué dans le piston (2) et débouchant dans la face de ce denier opposée à la tige (20) et par des perçages radiaux formés dans le piston (2) et débouchant d'une part dans la face périphérique (26) et dans le perçage axial.

10. Amortisseur selon l'une quelconque des revendications précédentes, **caractérisé en ce que** la masselotte est apte à ouvrir la voie d'évitement lors d'une forte accélération verticale dirigée vers le haut imprimée à la masse non suspendue.

## Patentansprüche

1. Stoßdämpfer, einen Stoßdämpferkörper (1) umfassend, in dem eine zylindrische Bohrung gebildet ist, in der gleitend ein Kolben (2) montiert ist, der die zylindrische Bohrung in zwei Arbeitskammern (10) unterteilt, die ein Arbeitsfluid, wie Öl, aufnehmen, wobei mindestens ein Fluid-Walzquerschnitt (22), der aus einem Durchgang und einem dem Durchgang zugeordneten Walzmittel gebildet wird, zwischen den beiden Arbeitskammern (10) durch den Kolben hindurch erstellt wird, der am Ende einer Kolbenstange (20) montiert ist und eine geometrische Längssymmetrieachse (AA') parallel zu seiner Bewegungsrichtung in der Bohrung beinhaltet, wobei der Kolben (2) weiter eine Umlauffläche oder Umlaufflächen parallel zu seiner geometrischen Längsachse beinhaltet, **dadurch gekennzeichnet, dass** der Kolben eine Führungstragweite (24), einen Kanal (25) zum Ausweichen des Walzmittels, der radial in die oder die eine (26) der Umlaufflächen des Kolbens (2) mündet, und imstande ist, für die Kommunikation zwischen den beiden Arbeitskammern (10) zu sorgen, und ein Ausgleichsgewicht (3), das entlang der Längsachse (AA') des Kolbens (2) gleitend montiert ist, auf der Führungstragweite (24) und auf der Umlauffläche (26) aufweist, und dies zwischen einer Verschlussposition des Kanals zum Ausweichen (25) und einer Freigabeposition dieses Letzteren, wobei das Ausgleichsgewicht (3) durch ein elastisches Rückstellorgan (4) zu der Verschlussposition des Kanals zum Ausweichen (22), das sich an einer Anschlagfläche (211) des Kolbens (2) anlegt, hingedrückt wird.

2. Stoßdämpfer nach dem vorstehenden Anspruch, **dadurch gekennzeichnet, dass** das elastische Rückstellorgan (4) tariert ist.

3. Stoßdämpfer nach Anspruch 1 oder Anspruch 2, **dadurch gekennzeichnet, dass** sich das Ausgleichsgewicht (3) in Verschlussposition des Kanals zum Ausweichen (25) an einer Anschlagfläche (212) des Kolbens (2) anlegt.

4. Stoßdämpfer nach einem der vorstehenden Ansprüche, **dadurch gekennzeichnet, dass** die Umlauffläche (26) und die Führungstragweite (24) zylindrisch und koaxial sind.

5. Stoßdämpfer nach einem der vorstehenden Ansprüche, **dadurch gekennzeichnet, dass** der Kanal zum Ausweichen (25) durch eine radiale Bohrung in Kommunikationsbeziehung mit dem Walzquerschnitt (22), und dies stromaufwärts von dem Walzmittel, den dieser Querschnitt beinhaltet, gebildet wird.

6. Stoßdämpfer nach dem vorstehenden Anspruch, **dadurch gekennzeichnet, dass** die Bohrung, aus der der Kanal zum Ausweichen (25) besteht, in den Durchgang mündet, aus dem der Walzquerschnitt (22) besteht, und dies stromaufwärts des Walzmittels.

7. Stoßdämpfer nach Anspruch 4 oder Anspruch 5, **dadurch gekennzeichnet, dass** der Kolben mehrere Walzquerschnitte (22) und mehrere Kanäle zum Ausweichen (25) in Kommunikationsbeziehung mit den Walzquerschnitten beinhaltet.

8. Stoßdämpfer nach einem der Ansprüche 5 bis 7, **dadurch gekennzeichnet, dass** das Ausgleichsgewicht (3) einen Ausgleichsgewichtkörper (30) aufweist, der eine Hülsenform aufweist, die mit einer axialen Durchgangsbohrung ausgestattet ist, in der ein Führungsring montiert ist, der gleitend auf der Führungstragweite (24) aufgesetzt ist, dass die Hülsenform des Ausgleichsgewichtkörpers (30) durch mehrere Arme (31) verlängert wird, die auf Abstand ein Verschlusselement (32) in Ringform tragen, das gleitend auf der Umlauffläche (26) aufgesetzt ist, und dass das Verschlusselement (32) mit einer inneren zylindrischen Fläche versehen ist, durch die es in Gleitsitz auf der Umlauffläche (26) montiert ist, wobei die innere zylindrische Fläche eine Verschlussfläche des Kanals zum Ausweichen (25) bildet.

9. Stoßdämpfer nach einem der Ansprüche 1 bis 4, **dadurch gekennzeichnet, dass** der Kanal zum Ausweichen (25) durch eine axiale Bohrung gebildet wird, die in den Kolben (2) eingearbeitet ist und auf die Fläche von Letzterem gegenüber der Stage (20) mündet und durch radiale Bohrungen, die in dem Kolben (2) gebildet werden und einerseits in die Umlauffläche (26) und in die axiale Bohrung münden.

10. Stoßdämpfer nach einem der vorstehenden Ansprüche, **dadurch gekennzeichnet, dass** das Ausgleichsgewicht imstande ist, den Kanal zum Ausweichen bei einer starken, nach oben gerichteten vertikalen Beschleunigung, die der ungefederten Masse aufgedrückt wird, zu öffnen.

## Claims

1. Shock absorber, comprising a shock absorber body (1) wherein is formed a cylindrical bore wherein is slidingly mounted a piston (2) dividing the cylindrical bore into two working chambers (10) receiving a working fluid such as oil, at least one rolling section (22) of fluid, formed from a passage and from a rolling means associated with the passage, being established between the two working chambers (10) through the piston, which is mounted at the end of a piston rod (20) and comprises a longitudinal geometrical axis (AA'), of symmetry, parallel to its direction of displacement in the bore, said piston (2) further comprising a peripheral face or peripheral faces parallel to its longitudinal geometrical axis, **characterised in that** the piston has a guiding surface (24), a bypass channel (25) of the rolling means, opening radially into the or one (26) of the peripheral faces of the piston (2), and capable of providing communication between the two working chambers (10) and a weight (3) slidingly mounted along the longitudinal axis (AA') of the piston (2), on the guiding surface (24) and on said peripheral face (26), and this between a sealed position of the bypass channel (25) and a position in which the latter is open, the weight (3) being biased towards the sealed position of the bypass channel (22) by a flexible return member (4) supported on an abutment surface (211) of the piston (2).

2. Shock absorber according to the preceding claim, **characterised in that** the flexible return member (4) is tared.

3. Shock absorber according to claim 1 or claim 2, **characterised in that** the weight (3) in the sealed position of the bypass channel (25), bears against an abutment surface (212) of the piston (2).

4. Shock absorber according to any preceding claim, **characterised in that** the peripheral face (26) and the guiding surface (24) are cylindrical and coaxial.

5. Shock absorber according to any preceding claim, **characterised in that** the bypass channel (25) is formed from a radial piercing in communication relation with the rolling section (22) and this upstream of the rolling means that this section comprises.

6. Shock absorber according to the preceding claim, **characterised in that** the piercing that forms the bypass channel (25) opens into the passage that forms the rolling section (22) and this upstream of the rolling means.

7. Shock absorber according to claim 4 or claim 5, **characterised in that** the piston comprises several rolling sections (22) and several bypass channels (25) in communication relation with the rolling sections.

8. Shock absorber according to any of claims 5 to 7, **characterised in that** the weight (3) has a weight body (30) that has the shape of a socket provided with an axial through bore wherein is mounted a guide ring slidingly engaged on the guiding surface (24), that the socket shape of the weight body (30) is extended by several arms (31) carrying at a distance a sealing element (32) in the form of a ring, slidingly engaged on the peripheral face (26) and that the sealing element (32) is provided with an internal cylindrical face through which it is mounted in sliding adjustment on the peripheral face (26), said internal cylindrical face forming a sealing face of the bypass channel (25).

9. Shock absorber according to any of claims 1 to 4, **characterised in that** the bypass channel (25) is formed by an axial piercing made in the piston (2) and opening into the face of the latter opposite the rod (20) and by radial piercings formed in the piston (2) and opening onto a part in the peripheral face (26) and in the axial piercing.

10. Shock absorber according to any preceding claim, **characterised in that** the weight is capable of opening the bypass channel during a strong vertical acceleration directed upwards imprinted at the non-suspended mass.
